# EUROPÄISCHE PATENTSCHRIFT

(11) **EP 1 036 495 B1**
(45) Veröffentlichungstag und Bekanntmachung des Hinweises auf die Patenterteilung: **26.06.2002**
(21) Anmeldenummer: 00104630.9
(22) Anmeldetag: 03.03.2000
(51) Int. Cl.: A01D 63/04

(54) **Halmteiler**
Crop divider
Diviseur d'épis

(30) Priorität: 17.03.1999 DE 19911827
(43) Veröffentlichungstag der Anmeldung: 20.09.2000
(73) Patentinhaber: DEERE & COMPANY, Moline, Illinois 61265-8098 (US)
(72) Erfinder: Welsch, Thomas, 66453 Gersheim (DE)
(74) Vertreter: Holst, Sönke, Dr.

(56) Entgegenhaltungen:
- EP-A- 0 539 745
- DE-A- 2 058 255
- DE-A- 2 454 479

## Beschreibung

Die Erfindung betrifft einen Halmteiler einer Erntegutbergungsvorrichtung, mit einem Abweiser, der über ein Gelenk mit einer relativ zur Vertikalen im Winkel angeordneten Schwenkachse an der Erntegutbergungsvorrichtung befestigt ist.

Aus der DE 2058255 A ist ein Mähdrescher mit einer Erntegutaufnahmeeinrichtung in Form eines Schneidwerks und daran befestigtem Halmteilern bekannt geworden, die um eine aus der vertikalen in Vorwärtsbewegungsrichtung leicht nach vorn geneigte Achse von einer Betriebsposition für den Erntebetrieb in eine Transportposition schwenkbar sind.

Ein schwenkbarer Halmteiler, bei dem die vertikale Schwenkachse seitlich gegenüber der Mittelachse des Halmteilers versetzt ist, ist in der DE 2454479 A offenbart.

In der EP 539 745 A ist ein Halmteiler für einen Mähdrescher wiedergegeben, der seitlich am Mähtisch des Mähdreschers um ein Gelenk mit vertikal verlaufender Schwenkachse verschwenkbar angebracht ist.

Bei den genannten Halmteilern ist ein relativ großer Abstand zwischen den Abweiserblechen der Halmteiler und der Seitenwand der Erntegutaufnahmevorrichtung vorhanden. Daher besteht keine Gefahr, daß der Halmteiler beim Verschenken gegen die Seitenwand stößt. Für die Ernte einiger Pflanzensorten ist aber ein Halmteiler mit Abweisern wünschenswert, die der Spitze der Seitenwand der Erntegutaufnahmeeinrichtung recht nahe kommen, und sie möglichst umschließen. Bei den bekannten Halmteilern wäre dann aber kein Verschwenken mehr möglich, da die Abweiserbleche dabei mit der Seitenwand zusammenstoßen würden. Daher muß im Stande der Technik ein hinreichender Abstand zwischen Abweiser und Seitenwand eingehalten, oder auf die Verschwenkbarkeit verzichtet werden.

Das der Erfindung zugrunde liegende Problem wird darin gesehen, einen schwenkbaren Halmteiler mit einem Abweiser zu schaffen, der möglichst nahe an einer Seitenwand einer Erntegutaufnahmevorrichtung positioniert werden kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, die Schwenkachse des Gelenks in einer quer zur Vorwärtsbewegungsrichtung der Erntegutbergungsvorrichtung verlaufenden Richtung seitlich zu neigen. Der Halmteiler mit dem Abweiser kann so mittels des Gelenks von einer Betriebsstellung, in der er sich in der Vorwärtsbewegungsrichtung der Erntegutbergungsvorrichtung (und der Erntemaschine, an der sie befestigt ist) nach vorn erstreckt, und einer Transportposition, in der er nach innen, in Richtung auf die Mitte der Erntegutbergungsrichtung zu verläuft, verschwenkt werden. Durch die Neigung der Schwenkachse des Gelenks, die vorzugsweise derart ist, daß die Oberseite der Schwenkachse weiter innen (d. h. in Richtung auf die Mitte der Erntegutbergungsvorrichtung zu) angeordnet ist als ihre Unterseite, beschreibt das in Vorwärtsbewegungsrichtung hintere Ende des Abweisers beim Verschwenken einen Kreis, der nicht in einer horizontalen Ebene verläuft, sondern in einer entsprechend des Winkels der Schwenkachse seitlich geneigten Ebene.

Auf diese Weise erreicht man, daß das hintere Ende des Abweisers relativ nahe an der Seitenwand - insbesondere einer Spitze der Seitenwand - der Erntegutbergungsvorrichtung positioniert werden kann, insbesondere durch geeignete Wahl des Neigungswinkels. Das hintere Ende des Abweisers stößt nicht an die Seitenwand, sondern kann über die (Spitze der) Seitenwand hinüber bzw. um sie herum verschwenkt werden.

Das Herumschwenken des hinteren Endes des Abweisers um oder über die (Spitze der) Seitenwand kann weiter unterstützt werden, indem die Schwenkachse des Gelenks auch in der Vorwärtsbewegungsrichtung insbesondere nach vorn geneigt ist; die Oberseite des Gelenks also weiter vorn ist als die Unterseite. Der vom hinteren Ende des Abweisers beschriebene Kreis verläuft dann in einer Ebene, die nicht nur seitlich, sondern auch nach vorn geneigt ist. Diese Neigung erlaubt, das hintere Ende des Abweisers noch näher an der (Spitze der) Seitenwand zu positionieren.

Um das hintere Ende des Abweisers nahe an (der Spitze) der Seitenwand positionieren zu können, bietet sich außerdem an, die Schwenkachse des Gelenks seitlich relativ zur Mittelachse des Abweisers zu versetzen. Die Mittelachse des Abweisers entspricht seiner Schwerpunktsachse, in Betriebsposition in Vorwärtsbewegungsrichtung betrachtet. Da der Abweiser in seine Transportposition nach innen verschwenkt wird, ist die Schwenkachse vorzugsweise ebenfalls nach innen versetzt, da dann der Abweiser in Betriebsposition näher an der Spitze der Seitenwand positioniert werden, und trotzdem um sie herum verschwenkt werden kann. Es ist denkbar, daß die Innenseite des Abweisers in der Transportposition (und beim Schwenken) an der Innenseite der Seitenwand verbleibt, während die Außenseite des Abweisers um die Seitenwand herum oder über sie hinüber schwenkt.

Der Abweiser kann in an sich bekannter Weise über ein erstes und ein zweites Element an der Erntegutbergungsvorrichtung, insbesondere an ihrer Seitenwand, befestigt werden. Das erste und zweite Element sind insbesondere Rohre. Das Gelenk verbindet das erste und das zweite Element schwenkbar miteinander.

Im Ergebnis kann sich der Abweiser von -einer in Vorwärtsbewegungsrichtung vorderen Spitze bis in die Nähe der Seitenwand der Erntegutbergungsvorrichtung erstrecken, und ohne Kollision mit der Seitenwand um sie (bzw. ihre Spitze) herum geschwenkt werden. Im speziellen weist der Abweiser einen bogenförmigen Querschnitt (in der Art eines umgedrehten U) mit nach unten weisenden Schenkeln auf, zwischen denen die Seitenwand (insbesondere ihre Spitze) angeordnet ist, falls der Halmteiler in seiner Betriebsstellung ist. Der Abweiser schwenkt durch die erfindungsgemäße Anordnung des Gelenks, wie bereits bemerkt, um die Seitenwand - insbesondere ihre Spitze - herum in die Transportstellung und zurück. Dabei kann der äußere Schenkel des Abweisers um die Seitenwand herum (oder über sie hinweg) geschwenkt werden, während der innere Schenkel des Abweisers beim Verschwenken an der Innenseite der Seitenwand verbleibt.

Der erfindungsgemäße Halmteiler kann an allen Arten von Erntegutbergungsvorrichtungen verwendet werden, wie Mähvorsätzen, Mähhäckslern (sogenannten Maisgebissen), oder Pflückern. Der Erntebergungsvorsatz kann insbesondere an Erntemaschinen, wie Mähdreschern und Feldhäckslern verwendet werden. Das Gelenk kann auch als separates Element geliefert und an separate oder bereits vorhandene Halmteiler montiert werden.

In der Zeichnung ist ein nachfolgend näher beschriebenes Ausführungsbeispiel der Erfindung dargestellt. Es zeigt:
- Fig. 1: einen Mähdrescher,
- Fig. 2: eine Seitenansicht einer Erntegutbergungsvorrichtung des Mähdreschers mit einem Halmteiler in Betriebsposition, und
- Fig. 3: eine Frontansicht auf die Erntegutbergungsvorrichtung mit einem in die Transportposition eingeschwenkten Halmteiler. -

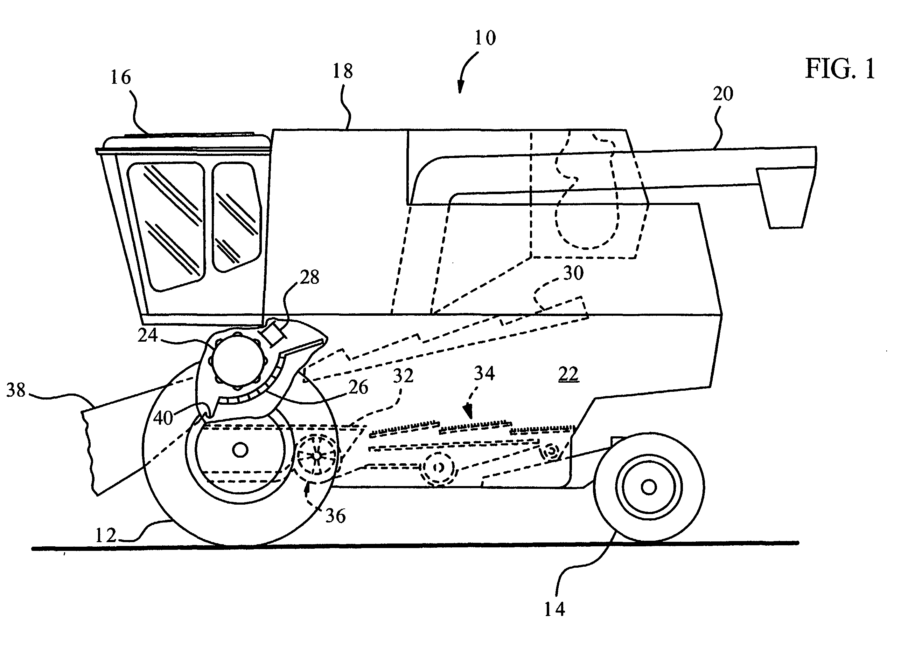

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

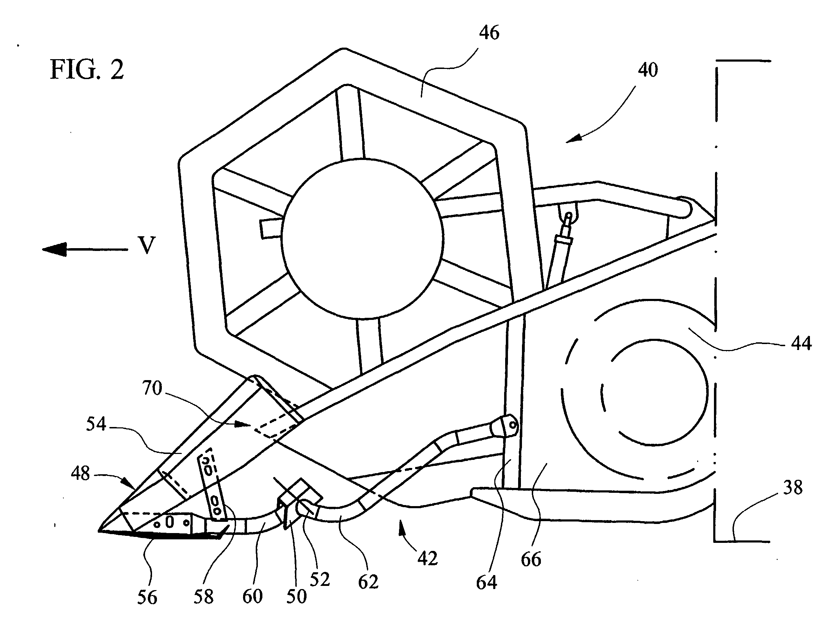

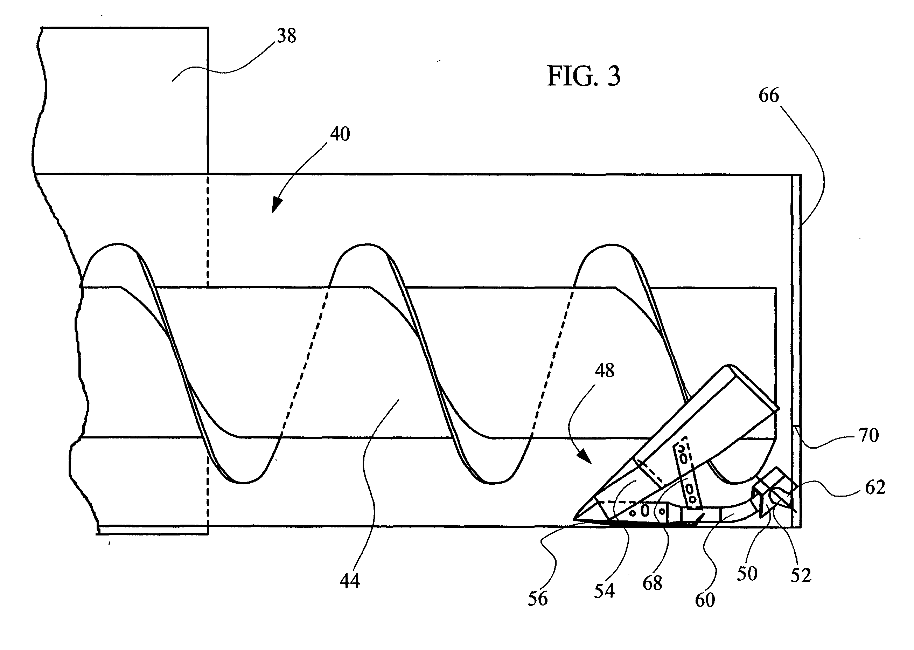

In Figur 2 ist eine Erntegutbergungsvorrichtung 40 in Form eines Mähvorsatzes für den in Figur 1 dargestellten Mähdrescher 10 dargestellt, die an der Frontseite des Schrägförderers 38 anbringbar ist. Die Erntegutbergungsvorrichtung 40 weist in an sich bekannter Weise ein querliegendes Schneidwerk 42 auf, das aus einem Mähtisch und einem Mähbalken gebildet ist. Dem Schneidwerk 42 ist ein Einzugsförderer 44, vorzugsweise eine Schnecke, zugeordnet und eine Haspel 46 mit Zinken vorgelagert. Weiterhin ist der Erntegutbergungsvorrichtung 40 ein seitlicher Halmteiler 48 vorgelagert, der in seiner Betriebsposition in Vorwärtsbewegungsrichtung V des Mähdreschers 10 zeigt und nach vorn vom Schneidwerk 42 absteht. Er ist in Figur 2 in Betriebsposition wiedergegeben und in Figur 3 in Transportstellung, in der er um ein Gelenk 50 mit einer Schwenkachse 52 -nach innen eingeschwenkt ist. In der Regel sind zwei symmetrische Halmteiler 48 an beiden Seiten der Erntegutbergungsvorrichtung 40 angeordnet. An beiden Seiten der Erntegutbergungsvorrichtung 40 sind Seitenwände 66 vorgesehen, die etwa dreiecksförmig ausgebildete Frontbereiche mit Spitzen 70 aufweisen. Die Spitzen 70 sind im Abstand oberhalb des Erdbodens angeordnet, etwa in einem Drittel der Höhe des Einzugsförderers 44.

Der Halmteiler 48 setzt sich aus einem Abweiser 54, einem Bodenblech 56, einer Stütze 68 und einem ersten Rohr 60 zusammen, das über das Gelenk 50 an einem zweiten Rohr 62 befestigt ist, das seinerseits an einer Strebe 64 der Seitenwand 66 der Erntegutbergungsvorrichtung 40 angebracht ist. Der schalenförmige, mit einem Querschnitt in der Form eines umgedrehten, auf dem Kopf stehenden U versehene Abweiser 54 wird durch die Stütze 68 in seiner schräg nach oben und entgegen der Vorwärtsbewegungsrichtung V weisenden Position gegenüber dem ersten Rohr 60 fixiert. Die Stütze 68 ist am ersten Rohr 60 angeschweißt. Auch das (zum Gleiten auf dem Erdboden eingerichtete) Bodenblech 56 ist an der flachgepreßten Vorderseite des ersten Rohrs 60 angebracht. Der Halmteiler 48 dient zur Abtrennung einer Bahn geernteten Gutes von der benachbarten, noch nicht geernteten Bahn. Daher ist das Abweiser 54 in seinem in Vorwärtsbewegungsrichtung V vorderen Bereich spitz geformt. In der in Figur 2 dargestellten Betriebsposition des Halmteilers 48 umschließen die zwei Schenkel des Abweisers 54 die Spitze 70 der Seitenwand 66. Es ist daher nicht zu befürchten, daß sich geerntetes Gut zwischen der Seitenwand und dem Halmteiler verklemmt. Es ist jedoch Sorge zu tragen, daß während des Verschwenkens eine Kollision des Halmteilers 48 mit der Spitze 70 vermieden ist.

Die Schwenkachse 52 des Gelenks 50 verläuft daher nicht vertikal, sondern, wie in Figur 2 erkennbar, gegenüber der Vertikalen in Vorwärtsbewegungsrichtung V nach vorn (in Figur 2 im Gegenuhrzeigersinn) geneigt, und wie aus der Figur 3, in der die Haspel 46 aus Gründen der Übersichtlichkeit fortgelassen wurde, hervorgeht, auch gegenüber der Vertikalen seitlich nach innen, in Richtung auf die Mitte der Erntegutbergungsvorrichtung 40 zu, geneigt (in Figur 3 im Gegenuhrzeigersinn). Außerdem ist die Schwenkachse 52 gegenüber den Achsen des ersten Rohrs 60 und des zweiten Rohrs 62 seitlich nach innen, in Richtung auf die Mitte der Erntegutbergungsvorrichtung 40 zu, versetzt. Beim Verschwenken von der Betriebsposition der Figur 2 in die Transportposition der Figur 3 dreht sich der Halmteiler 48 somit um die seitlich nach innen versetzte und geneigte Schwenkachse, und der äußere Schenkel des Abweisers 54 umrundet die Spitze 70, ohne mit ihr zusammenzustoßen. Auch der innere Schenkel des Abweisers 54 berührt die Spitze 70 nicht, sondern verbleibt auf der Innenseite der Seitenwand 66. Das erfindungsgemäße Gelenk erlaubt daher, die Spitze 70 der Seitenwand 66 sehr nahe am Abweiser 54 des Halmteilers 48 zu positionieren. Es bleibt anzumerken, daß das Gelenk 50 in der Betriebsposition und der Transportposition des Halmteilers 48 arretierbar ist, beispielsweise durch einen Splint, der durch entsprechene Löcher im Gehäuse des Gelenks 50 steckbar ist.

## Patentansprüche

1. Halmteiler (48) einer Erntegutbergungsvorrichtung (40), mit einem Abweiser (54), der über ein Gelenk (50) mit einer relativ zur Vertikalen im Winkel angeordneten Schwenkachse (52) an der Erntegutbergungsvorrichtung (40) befestigt ist, **dadurch gekennzeichnet, daß** die Schwenkachse (52) in einer quer zur Vorwärtsbewegungsrichtung der Erntegutbergungsvorrichtung verlaufenden Richtung seitlich geneigt ist.

2. Halmteiler (48) nach Anspruch 1, **dadurch gekennzeichnet, daß** die Schwenkachse (52) des Gelenks (50) nach innen, in Richtung auf die Mitte der Erntegutbergungsvorrichtung (40) zu, geneigt ist.

3. Halmteiler (48) nach Anspruch 1 oder 2, **dadurch gekennzeichnet, daß** die Schwenkachse (52) des Gelenks (50) zusätzlich in der Vorwärtsbewegungsrichtung (V) der Erntegutbergungsvorrichtung (40) insbesondere nach vorn geneigt ist.

4. Halmteiler (48) nach einem der Ansprüche 1 bis 3, **dadurch gekennzeichnet, daß** die Schwenkachse des Gelenks (50) seitlich relativ zur Mittelachse des Abweisers (54) versetzt ist, vorzugsweise in Richtung auf die Mitte der Erntegutbergungsvorrichtung (40) zu.

5. Halmteiler (48) nach einem der vorhergehenden Ansprüche, **dadurch gekennzeichnet, daß** sich der Abweiser (54) bis wenigstens in die Nähe einer Seitenwand (66) der Erntegutbergungsvorrichtung (40), insbesondere einer Spitze (70) der Seitenwand (66), erstreckt.

6. Halmteiler (48) nach Anspruch 5, **dadurch gekennzeichnet, daß** der Abweiser (54) einen bogenförmigen Querschnitt mit zwei nach unten weisenden Schenkeln aufweist, zwischen denen die Seitenwand (66) der Erntegutbergungsvorrichtung (40), insbesondere eine Spitze (70) der Seitenwand (66), angeordnet ist, falls der Halmteiler (48) in seiner Betriebsstellung ist.

7. Halmteiler (48) nach Anspruch 6, **dadurch gekennzeichnet, daß** der äußere Schenkel des Abweisers (54) beim Verschwenken des Gelenks (50) um die Seitenwand (66) herum oder über die Seitenwand (66) hinüber schwenkt.

8. Halmteiler (48) nach einem der vorhergehenden Ansprüche, **dadurch gekennzeichnet, daß** der Halmteiler (48) zwischen einer Betriebsposition, in der er sich in Vorwärtsbewegungsrichtung (V) der Erntegutbergungsvorrichtung (40) nach vorn erstreckt, und einer Transportposition, in der er um etwa 90° nach innen, in Richtung auf die Mitte der Erntegutbergungsvorrichtung (40) zu verschwenkt ist, bewegbar ist.

9. Halmteiler (48) nach einem der vorhergehenden Ansprüche, **dadurch gekennzeichnet, daß** er an einem Mähvorsatz oder einem Maispflücker oder einem Mähhäcksler befestigt ist.

10. Kombination aus einer Erntemaschine, insbesondere Mähdrescher (10) oder Feldhäcksler, mit einer Erntegutbergungsvorrichtung (40) und einem Halmteiler (48) nach einem der vorhergehenden Ansprüche.

11. Aufhängung eines Halmteilers (48), mit einem Gelenk (50) nach einem oder mehreren der Ansprüche 1 bis 9.

## Claims

1. A stalk divider (48) of a crop gathering appliance (40), with a deflector (54) which is fixed on the crop gathering appliance (40) by a joint (50) with a pivotal axis (52) arranged at an angle relative to the vertical, **characterized in that** the pivotal axis (52) is inclined to the side in a direction extending transverse to the direction of forward movement of the crop gathering appliance.

2. A stalk divider (48) according to claim 1, **characterized in that** the pivotal axis (52) of the joint (50) is inclined inwards in the direction towards the centre of the crop gathering appliance (40).

3. A stalk divider (48) according to claim 1 or 2, **characterized in that** the pivotal axis (52) of the joint (50) is additionally inclined in the direction of forward movement (V) of the crop gathering appliance (40), especially forwards.

4. A stalk divider (48) according to any of claims 1 to 3, **characterized in that** the pivotal axis of the joint (50) is offset to the side relative to the central axis of the deflector (54), preferably in the direction towards the centre of the crop gathering appliance (40).

5. A stalk divider (48) according to any of the preceding claims, **characterized in that** the deflector (54) extends at least up to the vicinity of a sidewall (66) of the crop gathering appliance (40), especially a tip (70) of the sidewall (66).

6. A stalk divider (48) according to claim 5, **characterized in that** the deflector (54) has an arcuate cross-section, with two limbs pointing downwards, in between which the sidewall (66) of the crop gathering appliance (40), in particular a tip (70) of the sidewall (66) is arranged when the stalk divider (48) is in its operating position.

7. A stalk divider (48) according to claim 6, **characterized in that** the outer limb of the deflector (54) swings round the sidewall (66) or over the sidewall (66) during deviation of the joint (50).

8. A stalk divider (48) according to any of the preceding claims, **characterized in that** the stalk divider (48) can be moved between an operating position, in which it extends forwards in the direction of forward movement (V) of the crop gathering appliance (40) and a transport position, in which it is swung through approximately 90 ° inwards, in the direction of the centre of the crop gathering appliance (40).

9. A stalk divider (48) according to any of the preceding claims, **characterized in that** it is fixed on a mower header or a maize picker or a chopper harvester.

10. A combination of a harvesting machine, especially a combine harvester (10) or forage harvester, with a crop gathering appliance (40) and a stalk divider (48) according to any of the preceding claims.

11. Suspension of a stalk divider (48) with a joint (50) according to one or more of claims 1 to 9.

## Revendications

1. Diviseur d'épis (48) d'un dispositif de récolte (40), équipé d'un déflecteur (54), qui est fixé au moyen d'une articulation (50) avec un axe de pivotement (52) disposé en angle par rapport à la verticale sur le dispositif de récolte (40), **caractérisé en ce que** l'axe de pivotement (52) est incliné sur le côté dans une direction transversale au sens d'avancement du dispositif de récolte.

2. Diviseur d'épis (48) selon la revendication 1, **caractérisé en ce que** l'axe de pivotement (52) de l'articulation (50) est incliné vers l'intérieur, en direction du centre du dispositif de récolte (40).

3. Diviseur d'épis (48) selon la revendication 1 ou 2, **caractérisé en ce que** l'axe de pivotement (52) de l'articulation (50) est incliné en supplément dans le sens d'avancement (V) du dispositif de récolte (40) en particulier vers l'avant.

4. Diviseur d'épis (48) selon l'une quelconque des revendications 1 à 3, **caractérisé en ce que** l'axe de pivotement de l'articulation (50) est décalé sur le côté par rapport à l'axe central du déflecteur (54), de préférence en direction du centre du dispositif de récolte (40).

5. Diviseur d'épis (48) selon l'une quelconque des revendications précédentes, **caractérisé en ce que** le déflecteur (54) s'étend jusqu'au moins à proximité d'une paroi latérale (66) du dispositif de récolte (40), en particulier d'une pointe (70) de la paroi latérale (66).

6. Diviseur d'épis (48) selon la revendication 5, **caractérisé en ce que** le déflecteur (54) présente une section en forme d'arc avec deux branches dirigées vers le bas, entre lesquelles est disposée la paroi latérale (66) du dispositif de récolte (40), en particulier une pointe (70) de la paroi latérale (66), lorsque le diviseur d'épis (48) est dans sa position de service.

7. Diviseur d'épis (48) selon la revendication 6, **caractérisé en ce que** la branche extérieure du déflecteur (54) bascule lors du pivotement de l'articulation (50) autour de la paroi latérale (66) ou par-dessus la paroi latérale (66).

8. Diviseur d'épis (48) selon l'une quelconque des revendications précédentes, **caractérisé en ce que** le diviseur d'épis (48) peut être déplacé entre une position de service, dans laquelle il s'étend vers l'avant dans le sens d'avancement (V) du dispositif de récolte (40), et une position de transport, dans laquelle il est basculé d'environ 90° vers l'intérieur, en direction du centre du dispositif de récolte (40).

9. Diviseur d'épis (48) selon l'une quelconque des revendications précédentes, **caractérisé en ce qu'**il est fixé sur un adaptateur de coupe ou un cueilleur d'épis de mais ou une faucheuse-hacheuse.

10. Combinaison d'une machine de récolte, en particulier une moissonneuse-batteuse (10) ou une ramasseuse-hacheuse, avec un dispositif de récolte (40) et un diviseur d'épis (48) selon l'une quelconque des revendications précédentes.

11. Suspension d'un diviseur d'épis (48), avec une articulation (50) selon l'une quelconque ou plusieurs des revendications 1 à 9.
